## Europäisches Patentamt

## European Patent Office

## Office européen des brevets

(11) Veröffentlichungsnummer: **0 153 608**
**B1**

(12) # EUROPÄISCHE PATENTSCHRIFT

(45) Veröffentlichungstag der Patentschrift:
**18.10.89**

(21) Anmeldenummer: **85101114.8**

(22) Anmeldetag: **02.02.85**

(51) Int. Cl.⁴: **F 24 D 17/00, F 24 J 3/00,
F 28 G 1/12, F 24 D 11/00,
F 24 D 11/02**

(54) **Vorrichtung zum Gewinnen von Wärme aus Schmutzwasser, insbesondere für Schwimmbad- und Duschanlagen.**

(30) Priorität: **23.02.84 DE 3406518**

(43) Veröffentlichungstag der Anmeldung:
**04.09.85 Patentblatt 85/36**

(45) Bekanntmachung des Hinweises auf die Patenterteilung:
**18.10.89 Patentblatt 89/42**

(84) Benannte Vertragsstaaten:
**AT BE CH DE FR GB IT LI LU NL SE**

(56) Entgegenhaltungen:
**AT-B- 273 187
DE-A- 3 119 809
DK-B- 134 950
US-A- 3 926 743**

**PATENT ABSTRACTS OF JAPAN, Band 3, Nr. 130 (M-78),
27. Oktober 1979, Seite 164 M 78; & JP - A - 54 108 107
(TOKYO SHIBAURA DENKI) 24.08.1979**

(73) Patentinhaber: **Menerga Apparatebau GmbH,
Gutenbergstrasse 51, D-4330 Mülheim a.d. Ruhr 12 (DE)**

(72) Erfinder: **Doerk, Horst, Am Hammershöfchen 3,
D-4300 Essen 18 (DE)**

(74) Vertreter: **Patentanwaltsbüro Cohausz & Florack,
Schumannstrasse 97, D-4000 Düsseldorf 1 (DE)**

ACTORUM AG

## Beschreibung

Die Erfindung betrifft eine Vorrichtung zum Gewinnen von Wärme aus Schmutzwasser, insbesondere für Schwimmbad- und Duschanlagen, mit einem einen Primärteil und einen ersten Sekundärteil aufweisenden Wärmetauscher, wobei der Primärteil vom Schmutzwasser durchströmt wird, mit einem Umschaltventil in dem dem Primärteil zugeordneten Kreislauf und mit einem dem Umschaltventil eingangsseitig vorgeschalteten Grobfilter, wobei mittels des Umschaltventils die Strömungsrichtung im Primärteil umkehrbar ist.

Die DE-A-3 119 809 beschreibt eine Vorrichtung zum Gewinnen von Wärme aus Schmutzwasser, insbesondere für Schwimmbad- und Duschanlagen, mit einem einen Primärteil und einen Sekundärteil aufweisenden Wärmetauscher, wobei der Primärteil vom Schmutzwasser durchströmt wird, mit einem Umschaltventil im dem dem Primärteil zugeordneten Kreislauf und mit einem dem Umschaltventil eingangsseitig vorgeschalteten Grobfilter, dadurch gekennzeichnet, daß mit mittels des Umschaltventils die Strömungsrichtung im Primärteil umkehrbar ist.

Sowohl Platten-Wärmetauscher als auch Rohr-Wärmetauscher haben den Nachteil, daß die Wasserströmung in ihnen nicht immer gleichmäßig verläuft, das heißt, daß insbesondere die Strömungsgeschwindigkeiten in einzelnen Bereichen dieser Wärmetauscher unterschiedlich sind. Ein gleichmäßiger Wärmeübergang an allen Wärmeaustauschflächen läßt sich deshalb nicht erzielen. Auch ist die Reinigung dieser Wärmetauscher vielfach schwierig. Als verhältnismäßig einfache Möglichkeit zum Reinigen der Wärmetauscher ist es aus der AT-A-273 187 bekannt, Reinigungskörper, in Form von Kugeln, zu verwenden, die den Wärmetauscher durchsetzen und abgesetzte Schmutzteile lösen, so daß sie herausgespült werden können. Die Kugeln laufen im Kreislauf um. Hierzu ist der Ausgang des Primärteils mit dessen Eingang verbunden, so daß abgekühltes Wasser dem Eingangswasser zugemischt wird und der Wirkungsgrad verschlechtert wird.

Der Erfindung liegt die Aufgabe zugrunde, eine Vorrichtung der eingangs genannten Art so auszubilden, daß sich der Wärmetauscher gründlich und einfach reinigen läßt.

Zur Lösung dieser Aufgabe wird erfindungsgemäß vorgeschlagen, daß der Primärteil des Wärmetauschers aus einem durchgehend verlaufenden Rohr von zumindest angenähert gleibleibendem Querschnitt gebildet ist, daß zwischen den Enden des als Primärteil des Wärmetauschers wirkenden Rohres und dem Umschaltventil jeweils ein Auffanggerät eingeschaltet ist, daß sich Reinigungskörper auch während des Normalbetriebes in jeweils einem der Auffanggeräte befinden, daß die Auffanggeräte mit Leitelementen versehen sind, die so in das Rohr hineinragen, daß die Reinigungskörper aufgefangen und abgeleitet werden können, und daß mindestens einer der Auffanggeräte eine von außen zugängliche verschließbare Öffnung aufweist, durch die die Reinigungskörper in das Rohr eingegeben bzw. aus diesem herausgenommen werden können. Das Reinigungssystem verschlechtert nicht den Wirkungsgrad des Wärmetauschers. Das durchgehend verlaufende Rohr von zumindest angenähert gleichbleibendem Querschnitt bietet den Vorteil einer gründlichen und vollständigen Reinigung mit Hilfe der Reinigungskörper. Von besonderer Bedeutung im Zusammenhang mit der Erfindung ist es, daß die Reinigungskörper nicht nur während einer Reinigung das Rohr in Gegenrichtung durchsetzen und dann aus einem Auffanggeräte entnommen werden, sondern daß die Reinigungskörper auch zu Beginn des Normalbetriebes in der entsprechenden Richtung von dem einen zu dem anderen Auffanggerät transportiert werden. Hierdurch besteht die Möglichkeit einer verhältnismäßig häufigen Reinigung des den Primärteil bildenden Rohres derart, daß das Umschaltventil selbsttätig beispielsweise stündlich für kurze Zeit zur Reinigung des Rohres umgeschaltet wird, ohne daß weitere Maßnahmen hinsichtlich der Handhabung der Reinigungskörper zu treffen sind, denn diese befinden sich immer in einem der Auffanggeräte, von dem aus sie zu Beginn der jeweils einsetzenden Strömung zu dem anderen Auffanggeräte transportiert werden. Durch entsprechende Ausbildung der Auffanggeräte ist es möglich, die Reinigungskörper mit Hilfe des Strömungsdrucks außerhalb des durchströmten Querschnitts zu halten, so daß die das Rohr durchsetzende Strömung nicht unzulässig gedrosselt wird.

Da während des Betriebes in entgegengesetzter Strömungsrichtung der Wärmetauscher nicht mehr nach dem Gegenstromprinzip arbeitet, wird es zweckmäßig sein, für diese verhältnismäßig kurze Zeit auf die Wiedergewinnung der Wärme zu verzichten. Es hat sich herausgestellt, daß die Möglichkeit einer ausreichend häufigen Reinigung in der beschriebenen Weise weitere Maßnahmen wie beispielsweise die Verwendung von Feinfiltern überflüssig macht. Es kommt hinzu, daß der gleichmäßige Querschnitt des Primärteils eine optimale Durchströmgeschwindigkeit und einen gleichmäßigen Wärmeübergang an der ganzen Wärmeaustauschfläche gewährleistet.

Die Verwendung eines durchgehenden Rohres bietet darüber hinaus erfindungsgemäß auch die Möglichkeit, daß dieses Rohr gleichzeitig als Primärteil eines zweiten Wärmetauschers dient, mit dem dem Wasser ebenfalls Wärme entzogen wird und dessen zweites Sekundärteil Bestandteil eines Kältemittelkreislaufes ist, der einen Kompressor aufweist und als Wärmepumpe arbeitet. Beide Wärmetauscher haben also einen einheitlichen Primärteil in Form des Rohres, so daß die die einfache Reinigung betreffenden Vorteile und auch die übrigen Vorteile für beide Wärmetauscher gleichermaßen gelten. Auch ergibt sich ein entsprechend geringer Herstellungsaufwand. Die zusätzliche Verwendung einer Wärmepumpenschaltung mit dem zweiten Wärmetauscher dient also zu einem weiteren Wärmeentzug aus dem Schmutzwasser und erhöht die zurückgewinnbare Wärmemenge. Die durch den zweiten Wärmetauscher und dem Kältemittelkreislauf zusätzlich gewonnene Wärme kann zweckmäßig über einen dritten Wärmetauscher einer von dem Sekundärteil des ersten Wärmetauschers kommenden Leitung zugeführt werden, so daß die rückgewonnene Wärme insgesamt abgeführt werden kann.

Nachfolgend wird ein Ausführungsbeispiel der Erfindung anhand einer Zeichnung näher beschrieben, die in schematischer Darstellung den Schaltplan einer zur Rückgewinnung von Wärme dienenden Vorrichtung zeigt.

Ein Rohr 10, das über seine Länge hin einen gleichmäßigen Querschnitt hat, bildet zusammen mit einem ersten Sekundärteil 11 einen ersten Wärmetauscher, der von Schmutzwasser durchsetzt wird. Die Strömungsrichtung im Rohr 10 ist mittels eines Umschaltventils 12 umkehrbar. Die für den dargestellten Schaltzustand geltende Strömungsrichtung ist durch Pfeile 13 bezeichnet.

Das Rohr 10 bildet mit einem zweiten Sekundärteil 14 einen zweiten Wärmetauscher. Der zweite Sekundärteil 14 ist Bestandteil eines Kältemittelkreislaufes, der dazu einen Kompressor 15, ein Expansionsventil 16 und einen Kondensator enthält. Der Kondensator bildet einen dritten Sekundärteil 17. Der zweite Sekundärteil 14 des zweiten Wärmetauschers ist ausgangsseitig mit einem Rohr 18 verbunden. Das Rohr 18 bildet mit dem dritten Sekundärteil 17 den Wärmetauscher des Kondensators.

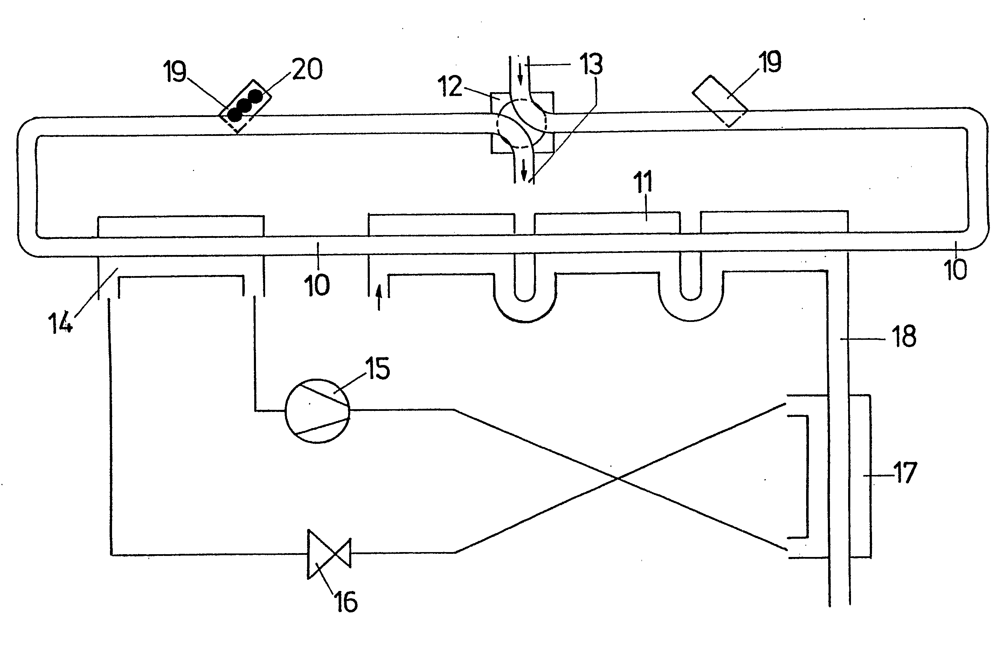

Zwischen den jeweils als Primärteil dienenden Bereichen des Rohres 10 und dem Umschaltventil 12 ist jeweils ein Auffanggerät 19 eingeschaltet. Dieses hat einen hier nicht dargestellten Verschluß, nach dessen Entfernen Reinigungskörper 20 in Form von Kugeln in das Rohr eingeleitet werden können. Die hier dargestellte Strömungsrichtung entspricht dem Normalbetrieb, währenddessen dem Schmutzwasser Wärme entzogen wird. Zu Beginn dieses Betriebes haben sich Reinigungskörper 20 in dem rechten Auffanggerät 19 befunden. Nach Durchsetzen des Rohres 10 befinden sie sich in dem linken Auffanggerät 19, und zwar in einer solchen Lage, daß der eigentliche Strömungsquerschnitt nicht verringert wird. Wenn jetzt durch eine hier nicht dargestellte Steuerung das Umschaltventil 12 beispielsweise einmal in der Stunde für kurze Zeit umgeschaltet wird, werden die Reinigungskörper 20 durch die jetzt in anderer Richtung verlaufende Strömung mitgenommen, so daß sie das Rohr 10 durchsetzen und von dem in der Zeichnung rechten Auffanggerät 19 wieder aufgefangen werden. Anschließend schaltet das Umschaltventil 12 wieder auf den Normalbetrieb bzw. die entsprechende Strömungsrichtung zurück.

Das das Rohr 10 durchsetzende Schmutzwasser hat beispielsweise eine Eingangstemperatur von 31 °C. Im Bereich des ersten Sekundärteils 11 und des zweiten Sekundärteils 14 wird die Temperatur durch Wärmeentzug bis auf 6 °C abgesenkt. Das diese beiden Wärmetauscher durchströmende Schmutzwasser kann also die für die Wärmeabgabe optimale Strömungsgeschwindigkeit haben, wobei die Wärmeabgabe an allen Wärmeaustauschflächen gleichmäßig ist. Das Reinigen der entsprechenden Primärteile erfolgt gleichzeitig mit Hilfe der Reinigungskörper 20. Im Bedarfsfall kann die Schaltstellung des Umschaltventils 12 für kurze Zeit geändert werden, so daß die Reinigungskörper 20 in umgekehrter Richtung das Rohr 10 durchsetzen können, wodurch sich gegebenenfalls auch Schmutzteile lösen lassen, die in der anderen Strömungsrichtung von den Reinigungskörpern 20 nicht oder nicht vollständig erfaßt werden.

Es ergibt sich ein überaus wirkungsvoller Wärmeentzug, denn Wasser, das dem ersten Sekundärteil 11 eingangsseitig mit etwa 10 °C zugesetzt wird, kann bis auf eine Temperatur von 38 °C an der Ausgangsseite des dritten Sekundärteils 17 erwärmt werden.

Die Auffanggeräte 19 können beispielsweise mit Leitelementen in Form von Zinken, Vorsprüngen oder dergleichen versehen sein, die so in den Strömungsquerschnitt hineinragen, daß die Reinigungskörper aufgefangen und abgeleitet werden können. Es können im Bereich der Auffanggeräte an den Rohrwandungen auch entsprechende Leitkanten oder dergleichen ausgebildet sein, die in den Abzweigteil eines Auffanggerätes 19 hineinführen.

Es sollte in jedem Fall darauf geachtet werden, daß der eigentliche Strömungsquerschnitt im Rohr 10 hierdurch so wenig wie möglich verengt wird. Gegebenenfalls kann man aber auch Auffanggeräte vorsehen, die mit beweglichen Leitelementen ausgestattet sind. Letztere brauchen dann nur jeweils für eine gewisse Zeit nach der Umschaltung der Strömungsrichtung in den Strömungsquerschnitt hineinbewegt zu werden.

Die Reinigungskörper 20 haben vorteilhaft die Form von Kugeln, deren Durchmesser demjenigen des Rohrquerschnitts angepaßt ist. Wenn die Kugeln aus elastischem Material bestehen, kann der Durchmesser sogar etwas größer gewählt werden als derjenig des Rohres 10.

## Patentansprüche

1. Vorrichtung zum Gewinnen von Wärme aus Schmutzwasser insbesondere für Schwimmbad und Duschanlagen, mit einem einen Primärteil (10) und einen ersten Sekundärteil (11) aufweisenden Wärmetauscher, wobei der Primärteil vom Schmutzwasser durchströmt wird, mit einem Umschaltventil (12) in dem dem Primärteil (10) zugeordneten Kreislauf und mit einem dem Umschaltventil (12) eingangsseitig vorgeschalteten Grobfilter, wobei mittels des Umschaltventils (12) die Strömungsrichtung im Primärteil umkehrbar ist, dadurch gekennzeichnet, daß der Primärteil des Wärmetauschers aus einem durchgehend verlaufenden Rohr (10) von zumindest angenähert gleichbleibendem Querschnitt gebildet ist, daß zwischen den Enden des als Primärteil des Wärmetauschers wirkenden Rohres (10) und dem Umschaltventil (12) jeweils ein Auffanggerät (19) eingeschaltet ist, daß sich Reinigungskörper (20) auch während des Normalbetriebes in jeweils einem der Auffanggeräte (19) befinden, daß die Auffanggeräte mit Leitelementen versehen sind, die so in das Rohr (10) hineinragen, daß die Reinigungskörper aufgefangen und abgeleitet werden können, und daß zumindest einer der Auffanggeräte (19) eine von außen zugängliche verschließbare Öffnung aufweist, durch die die Reinigungskörper (20) in das Rohr (10) eingegeben bzw. aus diesem herausgenommen werden können.

2. Vorrichtung nach Anspruch 1, dadurch gekennzeichnet, daß das Rohr (10) gleichzeitig als Primärteil eines zweiten Wärmetauschers mit zweitem Sekundärteil (14) dient mit dem dem Wasser ebenfalls Wärme entzogen wird und dessen zweites Sekundärteil (14) Bestandteil eines Kältemittelkreislaufes ist, der einen Kompressor (15) aufweist und als Wärmepumpe arbeitet.

3. Vorrichtung nach Anspruch 2, dadurch gekennzeichnet, daß die im Kältemittelkreislauf gewonnene Wärme über einen dritten Wärmetauscher (17, 18) mit drittem Sekundärteil (17) einer vom ersten Sekundärteil (11) des ersten Wärmetauschers kommenden Leitung (18) zugeführt wird.

## Claims

1. Equipment for extracting heat from waste water, in particular for swimming bath and shower installations, having a heat exchanger which has a primary section (10) and a first secondary section (11), the waste water flowing through the primary section, having a reversing valve (12) in the circuit associated with the primary section (10) and having a coarse filter upstream of the reversing valve (12) on the inlet side, it being possible to reverse the flow direction in the primary section by means of the reversing valve (12), characterized in that the primary section of the heat exchanger is formed from a continuously extending pipe (10) of at least approximately constant crosssection, in that a collection device (19) is inserted in each case between the ends of the pipe (10) acting as primary section of the heat exchanger and the reversing valve (12), in that cleaning bodies (20) are contained in one of the collection devices (19) in each case even during normal operation, in that the collection devices are fitted with guide elements which project into the pipe (10) in a manner such that the cleaning bodies can be collected and shunted off, and in that at least one of the collection devices (19) has a sealable opening accessible form the outside through which the cleaning bodies (20) can be inserted into the pipe (10) or can be removed from the latter.

2. Equipment according to Claim 1, characterized in that the pipe (10) simultaneously acts as primary section of a second heat exchanger having a second secondary section (14) with which heat is also extracted from the water and whose second secondary section (14) is a component of a coolant circuit which contains a compressor (15) and operates as heat pump.

3. Equipment according to Claim 2, characterized in that the heat extracted in the coolant circuit is fed via a third heat exchanger (17, 18) with third secondary section (17) to a line (18) coming from the first secondary section (11) of the first heat exchanger.

## Revendications

1. Appareil pour la récupération de chaleur provenant de l'eau usée, notamment pour des piscines et des douches, avec un échangeur de chaleur présentant une partie primaire (10) et une première partie secondaire (11), la partie primaire étant traversée par l'eau usée, avec une soupape d'inversion (12) dans la circulation adjointe à la partie primaire (10) et un filtre grossier intercalé du côté entrée de la soupape d'inversion (12), la direction d'écoulement dans la partie primaire pouvant être inversée au moyen de la soupape d'inversion (12), caractérisé en ce que la partie primaire de l'échangeur de chaleur est formée par un tube (10) s'étendant en continu à section restant au moins approximativement constante, qu'un dispositif collecteur (19) est inséré respectivement entre les extrémités du tube (10) agissant comme partie primaire de l'échangeur de chaleur et la soupape d'inversion (12), que des corps de nettoyage (20) se trouvent respectivement dans un des dispositifs collecteurs (19) également pendant le fonctionnement normal, que les dispositifs collecteurs sont munis d'éléments de guidage qui font saillie à l'intérieur du tube (10) de telle manière que les corps de nettoyage peuvent être interceptés et détournés, et qu'au moins un des dispositifs récepteurs (19) présente une ouverture pouvant être fermée accessible de l'extérieur, à travers laquelle les corps de nettoyage (20) peuvent être introduits dans le tube (10) ou en être extraits.

2. Appareil selon la revendication 1, caractérisé en ce que le tube (10) sert simultanément de partie primaire d'un deuxième échangeur de chaleur avec deuxième partie secondaire (14), par lequel de la chaleur est également extraite de l'eau, et dont la deuxième partie secondaire (14) fait partie d'une circulation d'un milieu de refroidissement qui présente un compresseur (15) et fonctionne comme pompe à chaleur.

3. Appareil selon la revendication 2, caractérisé en ce que la chaleur récupérée dans la circulation de milieu de refroidissement est amenée, par un troisème échangeur de chaleur (17, 18) avec une troisième partie secondaire (17), à une conduite (18) venant de la première partie secondaire (11) du premier échangeur de chaleur.